# EUROPEAN PATENT APPLICATION

(11) **EP 4 651 262 A1**
(43) Date of publication of application: **19.11.2025**
(21) Application number: 24775145.6
(22) Date of filing: 15.03.2024
(51) Int. Cl.: H01M 10/42, H01M 50/204

(54) **BATTERY MODULE**

(30) Priority: 17.03.2023 KR 20230035483; 14.03.2024 KR 20240036035
(71) Applicant: LG Energy Solution, Ltd., Seoul 07335 (KR)
(72) Inventor: KIM, Young Jin, Daejeon 34122 (KR); JUNG, Byeong Yoon, Daejeon 34122 (KR); OH, Young Soo, Daejeon 34122 (KR)
(74) Representative: Plasseraud IP
(86) International application number: PCT/KR2024/003320
(87) International publication number: WO 2024/196097

(57) **Abstract**

A battery module according to an embodiment of the present disclosure may include a case forming the exterior; a battery cell accommodated inside the case; a circuit unit that is located between the inner surface of the case and the battery cell and is connected to the battery cell to transmit and receive electrical signals; a temperature measurement unit that is located on one surface of the circuit unit facing the battery cell, measures the temperature of the battery cell to transmit the temperature information to the circuit unit, and is spaced apart from the battery cell at a regular interval; and a retaining portion located between the battery cell and the circuit unit.

## Description

### TECHNICAL FIELD

The present application claims priority to Korean Patent Application No. 10-2023-0035483 filed on March 17, 2023 and Korean Patent Application No. 10-2024-0036035 filed on March 14, 2024 in the Republic of Korea, the disclosures of which are incorporated herein by reference.

The present disclosure relates to a battery module having an improved structure of its part that measures the temperature of a battery cell.

### BACKGROUND ART

In general, the types of secondary batteries include nickel cadmium batteries, nickel hydrogen batteries, lithium-ion batteries, and lithium-ion polymer batteries. These secondary batteries are applied to and used in not only small products such as digital cameras, P-DVDs, MP3Ps, mobile phones, PDAs, portable game devices, power tools, and E-bikes, but also large products requiring high power such as electric vehicles or hybrid vehicles, power storage devices that store surplus generated power or renewable energy, and power storage devices for backup.

To manufacture such a secondary battery, an electrode active material slurry is first applied to a positive electrode current collector and a negative electrode current collector to prepare a positive electrode and a negative electrode, which are then stacked on both sides of a separator to form an electrode assembly with a predetermined shape. Then, the electrode assembly is accommodated in a battery case and sealed after an electrolyte is injected.

Such a secondary battery may be provided in plurality and accommodated in a case to be manufactured into a battery module. In the process of manufacturing and using the battery module, temperature management within the battery module is one of the essential management issues. This is because damage and failure of the internal configuration of the battery module may be predicted and responded to by checking the temperature inside the battery module.

Specifically, there may be a problem that the battery cell accommodated inside the battery module is damaged or broken due to external environments or internal defects. Damage and deterioration of the battery cell may cause swelling in which the battery cell swells. This swelling causes secondary problems, such as deteriorating the performance of the battery module or affecting other surrounding components.

Therefore, there is a need for a battery module that effectively senses the temperature inside the battery module to prevent secondary problems caused by deformation of the battery cell. In addition, there is a need for a battery module whose configuration for sensing temperature does not receive an external force even if swelling of the battery cell occurs.

### SUMMARY

### TECHNICAL PROBLEM

To solve the above-described problem, the present disclosure is directed to providing a battery module that prevents a temperature measurement unit from being broken or malfunctioning due to internal structural deformation.

### TECHNICAL SOLUTION

A battery module according to an embodiment of the present disclosure may include a case forming the exterior; a battery cell accommodated inside the case; a circuit unit that is located between the inner surface of the case and the battery cell and is connected to the battery cell to transmit and receive electrical signals; a temperature measurement unit that is located on one surface of the circuit unit facing the battery cell, measures the temperature of the battery cell to transmit the temperature information to the circuit unit, and is spaced apart from the battery cell at a regular interval; and a retaining portion located between the battery cell and the circuit unit.

The circuit unit may include a circuit body connected to the inner surface of the case; and a bent part having one side connected to the circuit body and bent toward the battery cell.

The temperature measurement unit may be connected to one surface of the bent part facing the battery cell.

The bent part may be formed by being recessed from the circuit body, and a spare space may be formed between the bent part and the circuit body.

The temperature measurement unit may be movable to the spare space.

The other end of the bent part may be spaced apart from the circuit body in a state where only one end of the bent part is connected to the circuit body.

The retaining portion may be located between the battery cell and the bent part, and may be attached to the battery cell and the bent part.

The retaining portion may be connected to one surface of the bent part to which the temperature measurement unit is connected.

As the retaining portion is pushed in the outward direction of the battery cell by the battery cell, the temperature measurement unit may be moved in a direction parallel to the direction where the retaining portion is pushed.

One surface of the bent part to which the temperature measurement unit and the retaining portion are connected may include a flat surface.

The bent part may be formed in plurality.

The retaining portion may be provided in plurality, and the temperature measurement unit may be located between the plurality of retaining portions.

The plurality of retaining portions and the temperature measurement unit may be located on one surface of the bent part facing the battery cell, and at least one of the plurality of retaining portions may be located closer to the connection part of the circuit body and the bent part than the temperature measurement unit.

The retaining portion may be located on one surface of the circuit unit where the temperature measurement unit is located, and may separate the circuit unit and the temperature measurement unit from the battery cell at a regular interval.

The temperature measurement unit may be movable in a direction away from the battery cell.

### ADVANTAGEOUS EFFECTS

According to a preferred embodiment of the present disclosure, the performance and life of a battery module may be extended by preventing a temperature measurement unit from being broken or malfunctioning due to internal structural deformation.

In addition, effects that can be easily predicted by those having ordinary skill in the art from configurations according to a preferred embodiment of the present disclosure may be included.

### BRIEF DESCRIPTION OF THE DRAWINGS

The accompanying drawings illustrate a preferred embodiment of the present disclosure and together with the following detailed description, serve to provide a further understanding of the technical aspect of the present disclosure, and thus, the present disclosure should not be construed as being limited to the drawings.
FIG. 1 is a perspective view of a battery module according to an embodiment of the present disclosure.
FIG. 2 is a perspective view of a battery module with a case removed according to an embodiment of the present disclosure.
FIG. 3 is a perspective view of a busbar assembly according to an embodiment of the present disclosure.
FIG. 4 is an enlarged view of area P in FIG. 3 as viewed from above.
FIG. 5 is an internal cross-sectional view of a battery module according to an embodiment of the present disclosure.
FIG. 6 is an enlarged view of area P in FIG. 3 as viewed from below.
FIG. 7 is an exploded view of a battery module according to still another embodiment of the present disclosure.
FIG. 8 is a cross-sectional view of a battery module according to still another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, identical or similar reference numerals are affixed to identical or similar elements throughout the present disclosure.

In addition, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

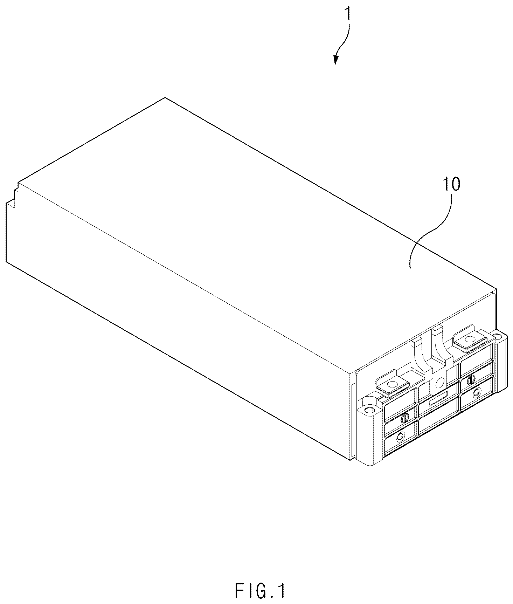

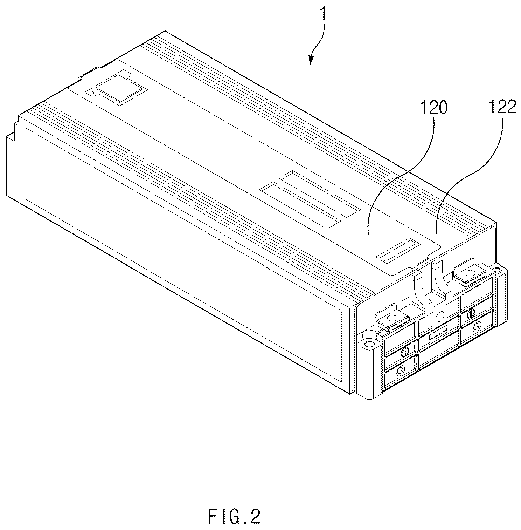

FIG. 1 is a perspective view of a battery module 1 according to an embodiment of the present disclosure, and FIG. 2 is a perspective view of a battery module 1 with a portion of a case 10 removed according to an embodiment of the present disclosure.

Referring to FIGS. 1 and 2, the battery module 1 according to an embodiment of the present disclosure may store electrical energy by accommodating a configuration where electrodes are stacked therein and may output the stored electrical energy to the outside as designed and required. The battery module 1 may sense and measure heat generated internally in the process of storing and outputting electrical energy. For example, the battery module 1 may be provided with a temperature sensor to sense and measure abnormal changes in internal temperature, such as phenomena like heat generation and swelling due to an increase in battery cell resistance. In addition, the battery module 1 may include a structure protecting a configuration that senses and measures internal temperature.

Specifically, the battery module 1 may include a case 10, a battery cell 11, a busbar assembly 12, and a retaining portion 13.

The case 10 may form the exterior of the battery module 1. In other words, the case 10 may include a shape surrounding the outside of an accommodation space in a state where the accommodation space is formed inside. Through this structure, the case 10 may accommodate each configuration necessary for the battery function therein and protect each configuration from the external environment.

The battery cell 11 may store electrical energy and may output the stored electrical energy as designed and required. For example, the battery cell 11 is accommodated inside the case 10 and is electrically connected to the busbar assembly 12 to be described later, so that the stored energy may be output to the outside through the busbar assembly 12.

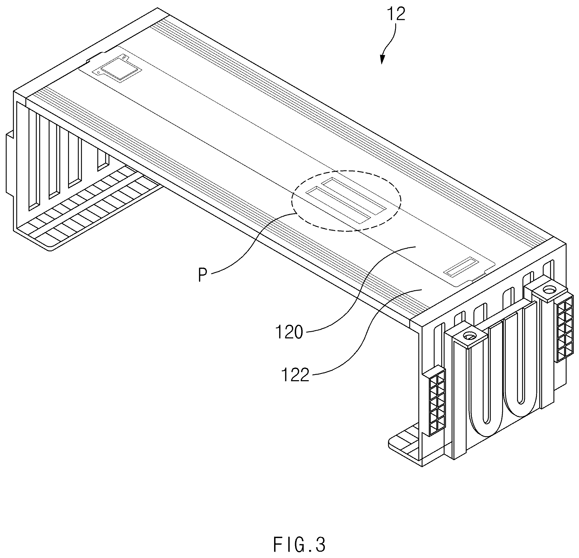

FIG. 3 is a perspective view of a busbar assembly 12 according to an embodiment of the present disclosure.

Referring to FIG. 3, the busbar assembly 12 may be electrically connected to the battery cell 11. For example, the busbar assembly 12 may be connected to the battery cell 11 to function as a conduit for electrical energy. In addition, the busbar assembly 12 may transmit an electrical signal required for controlling the battery cell 11 to the battery cell 11, or may transmit an electrical signal generated from the battery cell 11 to the control configuration. In this case, an electrical problem such as overcurrent may be sensed by the control configuration through the busbar assembly 12, thereby preventing problems such as breakage or damage to the battery cell 11 in advance.

Additionally, the busbar assembly 12 may structurally connect the battery cells 11. For example, in order for the battery module 1 to achieve a certain level of output and capacity or higher, multiple battery cells 11 should be connected in parallel or in series, and the busbar assembly 12 may be utilized to structurally connect the multiple battery cells 11.

The busbar assembly 12 may include a busbar frame 122, a circuit unit 120, and a temperature measurement unit 121.

The busbar frame 122 may be connected to the battery cell 11. For example, the busbar frame 122 may be connected to the battery cell 11 so as to be parallel to the length direction of the battery cell 11 and may include a shape surrounding the battery cell 11. That is, the busbar frame 122 may be connected to the battery cell 11 to surround a portion of the battery cell 11, including both ends of the battery cell 11, so as to be electrically connected to both terminals of the battery cell 11 through a busbar. According to this structure, a plurality of battery cells 11 may be fastened to each other by the busbar frame 122 to be integrally formed.

The circuit unit 120 may be coupled to the busbar assembly 12 and electrically connected to the battery cell 11 to transmit and receive electrical signals. For example, a through hole is formed inside the busbar frame 122, and the circuit unit 120 may be inserted into the through hole of the busbar frame 122 or coupled through tape attachment. That is, the circuit unit 120 may be coupled to the busbar frame 122 so that it is located between the inner surface of the case 10 and the battery cell 11. In addition, a portion of the circuit unit 120 may protrude toward the battery cell 11. Depending on the change in size or volume of the battery cell 11, a portion of the circuit unit 120 may be movable.

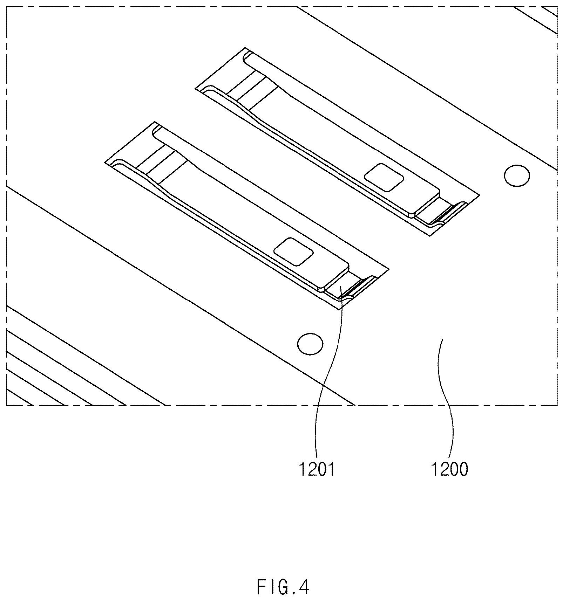

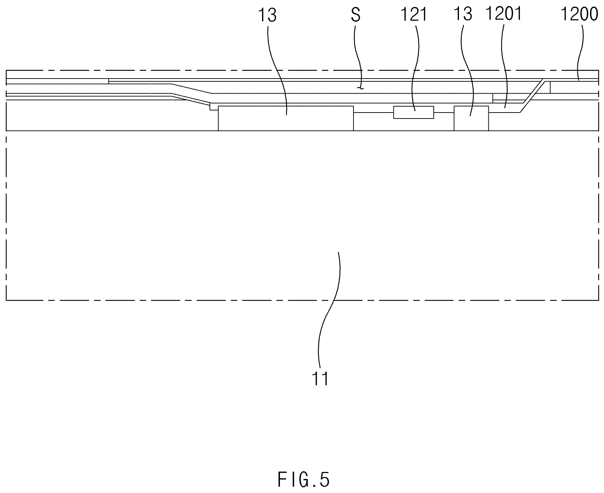

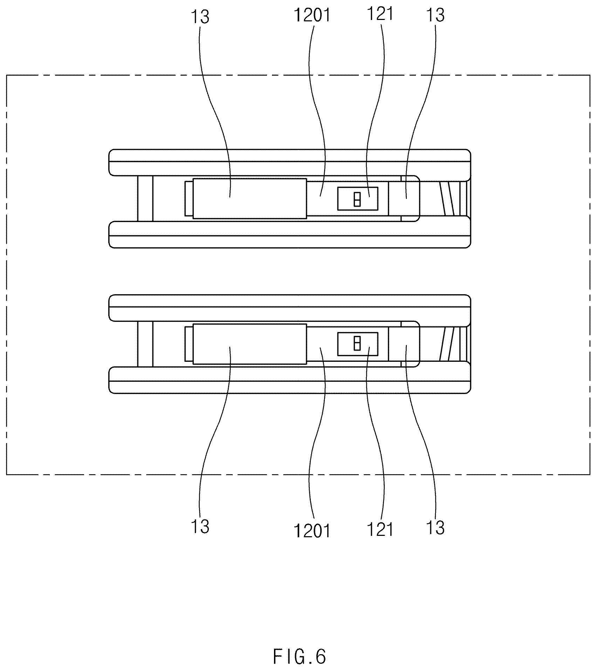

FIG. 4 is an enlarged view of area P in FIG. 3 as viewed from above, FIG. 5 is an internal cross-sectional view of a battery module according to an embodiment of the present disclosure, and FIG. 6 is an enlarged view of area P in FIG. 3 as viewed from below.

Referring to FIGS. 4 to 6, the circuit unit 120 may include a circuit body 1200 and a bent part 1201.

The circuit body 1200 may be connected to the inner surface of the case 10. The circuit body 1200 is a part that forms the frame of the circuit unit 120, and as described previously, it may be inserted into the through hole formed on the inside of the busbar frame 122 or coupled by tape attachment. For example, the through hole inside the busbar frame 122 may be formed along the length direction of the battery cell 11, and the circuit body 1200 may also be disposed along the length direction of the battery cell 11.

The bent part 1201 may have one side connected to the circuit body 1200 and may be bent toward the battery cell 11. For example, the bent part 1201 may include a shape protruding toward the battery cell 11 while being connected to the circuit body 1200 to be bent. That is, the other end of the bent part 1201 may be spaced apart from the circuit body 1200 in a state where only one end of the bent part 1201 is connected to the circuit body 1200. In other words, one side of the bent part 1201 is connected to the circuit body 1200 in a bent shape, and the bent part 1201 is formed by extending from one side of the bent part 1201, so that the other side of the bent part 1201 may be formed to be spaced apart from the circuit body 1200.

Specifically, the bent part 1201 may be formed by being recessed from the circuit body 1200. For example, the circuit body 1200 includes a penetrating part on the inside, and as viewed from above, the bent part 1201 may be located at the penetrating part of the circuit body 1200. That is, the bent part 1201 may be formed to protrude from the circuit body 1200 toward the battery cell 11 so as to be located at a lower side of the penetrating part of the circuit body 1200.

As a more specific example, the bent part 1201 may have a shape similar to the English capital letter L. In the L shape, the horizontal part may be longer and the vertical part may be shorter. And, the part corresponding to the vertical part of the L shape may have an inclined shape.

And, a spare space S may be formed between the bent part 1201 and the circuit body 1200. In other words, the spare space S may be formed between the extended surface of the penetrating part of the circuit body 1200 and the bent part 1201.

The temperature measurement unit 121 may measure the temperature of the battery cell 11 and transmit the temperature information to the circuit unit 120. For example, the temperature measurement unit 121 may include at least one instrument for sensing temperature, such as a resistance thermometer detector (RTD), a thermocouple, and a thermistor, to measure the temperature of the battery cell 11. That is, the temperature measurement unit 121 may convert the temperature of the battery cell 11 into an electrical signal and transmit it to the circuit unit 120.

The temperature measurement unit 121 may be located on one surface of the circuit unit 120 facing the battery cell 11. For example, the temperature measurement unit 121 may be connected to one surface of the bent part 1201 facing the battery cell 11. That is, the spare space S and the temperature measurement unit 121 may be located on both sides of the bent part 1201 with respect to the bent part 1201. In other words, the spare space S may be formed on the upper side of the bent part 1201, and the temperature measurement unit 121 may be connected to the lower side surface of the bent part 1201.

The temperature measurement unit 121 may be spaced apart from the battery cell 11 at a regular interval. That is, the temperature measurement unit 121 may not be in contact with the battery cell 11. In this case, the temperature measurement unit 121 may be movable in a direction away from the battery cell 11. For example, in a state where the temperature measurement unit 121 is spaced apart from the battery cell 11 at a regular interval, a phenomenon may occur in which the battery cell 11 approaches the temperature measurement unit 121, such as swelling, and in this case, the temperature measurement unit 121 may be moved in a direction away from the battery cell 11. At this time, the temperature measurement unit 121 may be moved toward the spare space S. More specific phenomena and structures will be described later as in the description of the retaining portion 13.

The retaining portion 13 may be located between the battery cell 11 and the circuit unit 120. The retaining portion 13 is located between the battery cell 11 and the circuit unit 120, so that both surfaces of the retaining portion 13 may be connected to the battery cell 11 and the circuit unit 120, respectively. For example, the retaining portion 13 may include a pad material, which may be attached to the battery cell 11 and the circuit unit 120.

Specifically, the retaining portion 13 may be located between the battery cell 11 and the bent part 1201 and may be attached to the battery cell 11 and the bent part 1201. According to this structure, the retaining portion 13 may separate the circuit unit 120 and the temperature measurement unit 121 from the battery cell 11 at a regular interval.

The retaining portion 13 may be located on one surface of the circuit unit 120 where the temperature measurement unit 121 is located. That is, the retaining portion 13 and the temperature measurement unit 121 may be located on the same plane of the circuit unit 120. Specifically, the retaining portion 13 may be connected to one surface of the bent part 1201 to which the temperature measurement unit 121 is connected. In this case, the distance between both surfaces of the retaining portion 13 to which the battery cell 11 and the circuit unit 120 are connected may be longer than the distance between one surface of the temperature measurement unit 121 to which the circuit unit 120 is connected and the other surface of the temperature measurement unit 121 facing the battery cell 11. In other words, as viewed from the side, the height of the retaining portion 13 may be higher than the height of the temperature measurement unit 121.

According to this structure, the retaining portion 13 may maintain a constant distance between the temperature measurement unit 121 and the battery cell 11. In addition, as the retaining portion 13 is pushed in the outward direction of the battery cell 11 by the battery cell 11, the temperature measurement unit 121 may be moved in a direction parallel to the direction where the retaining portion 13 is pushed. That is, when the battery cell 11 swells due to swelling of the battery cell 11 in a state where the temperature measurement unit 121 is spaced apart from the battery cell 11 at a regular interval, the retaining portion 13 is pushed along the battery cell 11, the retaining portion 13 receiving an external force from the battery cell 11 acts to push the bent part 1201, and the temperature measurement unit 121 connected to the bent part 1201 receiving an external force from the retaining portion 13 may also be pushed along the retaining portion 13. As a result, regardless of the change in volume of the battery cell 11, the temperature measurement unit 121 may always maintain a constant distance from the battery cell 11.

One surface of the bent part 1201 where the temperature measurement unit 121 and the retaining portion 13 are connected may include a flat surface. For example, one surface of the bent part 1201 where the temperature measurement unit 121 and the retaining portion 13 are connected is formed to be flat and may be disposed parallel to one surface of the battery cell 11 facing the circuit unit 120.

The retaining portions 13 may be provided in plurality, and the temperature measurement unit 121 may be located between the plurality of retaining portions 13. In other words, the plurality of retaining portions 13 and the temperature measurement unit 121 may be located on one surface of the bent part 1201 facing the battery cell 11. In this case, at least one of the plurality of retaining portions 13 may be located closer to the connection part of the circuit body 1200 and the bent part 1201 than the temperature measurement unit 121.

According to this structure, the circuit unit 120 does not contact the battery cell 11 without a notching structure and maintains a constant distance from all parts of the battery cell 11, and the temperature measurement unit 121 is located between the plurality of retaining portions 13, so that damage and breakage of the temperature measurement unit by the battery cell 11 may be further prevented.

When an overcurrent beyond the limit flows through the battery cell 11, when the battery cell 11 is damaged by an external force, or when the electrolyte causes an abnormal decomposition reaction, the temperature of the battery cell 11 may rise rapidly, and the rapidly rising temperature may result in an accident where the battery cell 11 swells and explodes. To prevent this in advance, the temperature measurement unit 121 senses the temperature of the battery cell 11 in real time and transmits an electrical signal to the control configuration through the circuit unit 120, and the temperature measurement unit 121 may sense the temperature of the battery cell 11 more stably due to the structural features of the circuit unit 120 and the retaining portion13 described above.

In addition, by designing a structure in which only one end of the bent part 1201 is connected to the circuit body 1200 and the other end of the bent part 1201 and the temperature measurement unit 121 may move to the spare space S, the bent part 1201 may include a structure that is more buffered against the swelling of the battery cell 11. That is, when only one end of the bent part 1201 is connected to the circuit body 1200, the buffering effect of the bent part 1201 and the retaining portion 13 may be further increased than when both ends of the bent part 1201 are connected to the circuit body 1200.

As a result, the structural stability and measurement accuracy of the temperature measurement unit 121 are increased, so that the performance of the battery module 1 may be further secured and the life of the battery module 1 may be further increased.

Hereinafter, the battery module 1 of the present disclosure according to another embodiment will be described. Specifically, an embodiment in which a plurality of bent parts 1201 described above are provided will be described below. However, the following description will be omitted for the contents overlapping with the above-described contents.

The battery module 1 of the present disclosure according to another embodiment may include a plurality of bent parts 1201. In addition, it may include a plurality of retaining portions 13 and a plurality of temperature measurement units 121 respectively connected to the plurality of bent parts 1201. According to this structure, when swelling occurs partially in each part of the battery cell 11, the battery module 1 may more effectively prevent the problem of damage to the temperature measurement unit 121 due to swelling by each bent part 1201 and the temperature measurement unit 12 located corresponding to each part of the battery cell 11 where swelling occurs. In addition, the battery module 1 may sense the temperature of each part of the battery cell 11 that is problematic and may identify the part or configuration of the battery cell 11 that causes the problem, thereby preventing secondary damage caused by swelling more effectively.

Additionally, hereinafter, the battery module 2 of the present disclosure according to still another embodiment will be described. Specifically, the battery module 2 of the present disclosure according to still another embodiment may be formed in a U-frame structure, unlike the battery module 1 of the present disclosure according to an embodiment described above. The following description will be omitted for some contents overlapping with the contents of the battery module 1 of the present disclosure according to an embodiment described above.

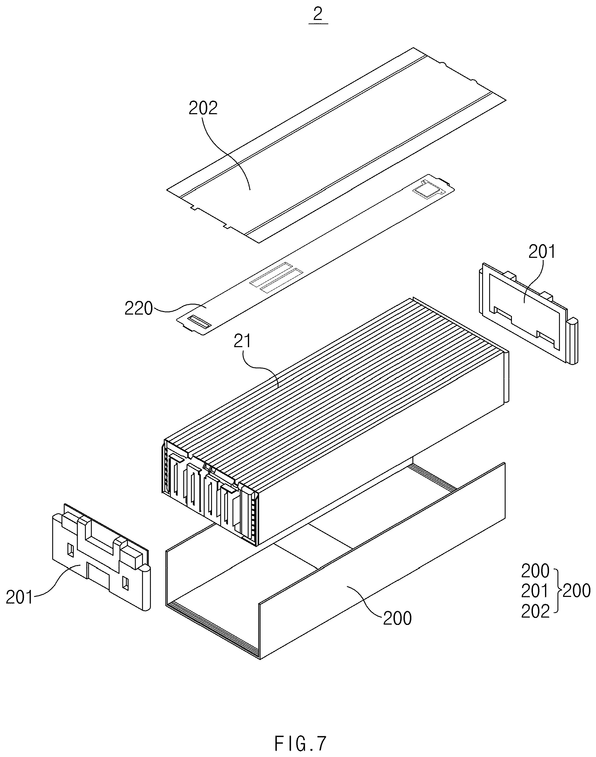

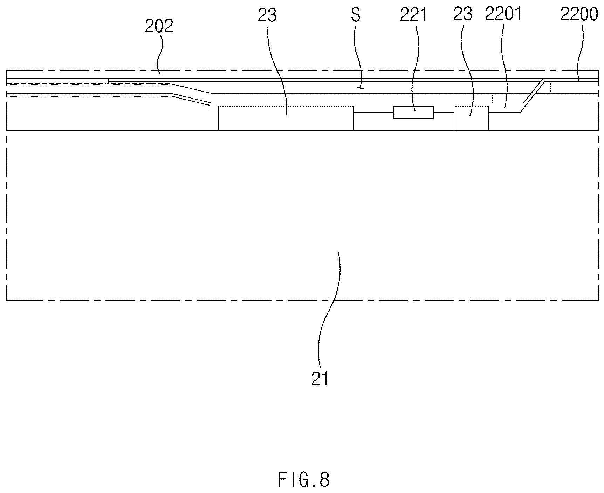

FIG. 7 is an exploded view of a battery module 2 according to still another embodiment of the present disclosure, and FIG. 8 is a cross-sectional view of a battery module 2 according to still another embodiment of the present disclosure.

Referring to FIGS. 7 and 8, the battery module 2 may include a case 20, a battery cell 21, a circuit unit 220, a temperature measurement unit 221, and a retaining portion 23.

The case 20 may form the exterior of the battery module 2. In other words, the case 20 may form an accommodation space on the inside and may include a shape surrounding the outside of the accommodation space, thereby accommodating each configuration necessary for the battery function therein.

Specifically, the case 20 may include a U-frame 200 forming the bottom and side surfaces, end plates 201 covering the front and rear surfaces of the U-frame 200, a cover plate 202 that covers the upper side of the U-frame 200 and the end plate 201 to seal the inner accommodation space.

The battery cell 21 may store electrical energy and may output the stored electrical energy as designed and required. The battery cell 21 may be accommodated inside the case 20.

The circuit unit 220 may be coupled to the inner surface of the case 20 and may transmit and receive electrical signals from the temperature measurement unit 221 to be described later. For example, the circuit unit 220 may be located between the case 20 and the battery cell 21. That is, the circuit unit 220 may be located at the lower side of the cover plate 201 and may be located between the cover plate 201 and the battery cell 21.

In addition, a portion of the circuit unit 220 may protrude toward the battery cell 21. Depending on the change in size or volume of the battery cell 21, a portion of the circuit unit 220 may be movable. For example, the circuit unit 220 may include a circuit body 2200 and a bent part 2201.

The circuit body 2200 may be coupled to the inner lower surface of the cover plate 201. One side of the bent part 2201 may be connected to the circuit body 2200, and the other side of the bent part 2201 may be bent toward the battery cell 21. Specifically, the bent part 2201 may be formed by being recessed from the circuit body 2200. A spare space S may be formed between the bent part 2201 and the circuit body 2200.

The temperature measurement unit 221 may measure the temperature of the battery cell 21 to transmit the temperature information to the circuit unit 220. That is, the temperature measurement unit 221 may convert the temperature of the battery cell 21 into an electrical signal and transmit it to the circuit unit 220.

The temperature measurement unit 221 may be located on one surface of the circuit unit 220 facing the battery cell 21. For example, the temperature measurement unit 221 may be connected to one surface of the bent part 2201 facing the battery cell 21.

The temperature measurement unit 221 may be spaced apart from the battery cell 21 at a regular interval. That is, the temperature measurement unit 221 may not be in contact with the battery cell 21. In this case, the temperature measurement unit 221 may be movable in a direction away from the battery cell 21.

Specifically, the retaining portion 23 may be located between the battery cell 21 and the circuit unit 220. The retaining portion 23 is located between the battery cell 21 and the circuit unit 220, so that both surfaces of the retaining portion 23 may be connected to the battery cell 21 and the circuit unit 220, respectively. The retaining portion 23 may be located between the battery cell 21 and the bent part 2201, and may be attached to the battery cell 21 and the bent part 2201. According to this structure, the retaining portion 23 may separate the circuit unit 220 and the temperature measurement unit 221 from the battery cell 21 at a regular interval.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [LIST OF REFERENCE NUMERALS]

1: Battery module
10: Case
11: Battery cell
12: Busbar assembly
120: Circuit unit
121: Temperature measurement unit
122: Busbar frame
1200: Circuit body
1201: Bent part
13: Retaining portion
S: Spare space

## Claims

1. A battery module, comprising:
a case forming the exterior;
a battery cell accommodated inside the case;
a circuit unit that is located between the inner surface of the case and the battery cell and is connected to the battery cell to transmit and receive electrical signals;
a temperature measurement unit that is located on one surface of the circuit unit facing the battery cell, measures the temperature of the battery cell to transmit the temperature information to the circuit unit, and is spaced apart from the battery cell at a regular interval; and
a retaining portion located between the battery cell and the circuit unit.

2. The battery module according to claim 1,
wherein the circuit unit comprises:
a circuit body connected to the inner surface of the case; and
a bent part having one side connected to the circuit body and bent toward the battery cell.

3. The battery module according to claim 2,
wherein the temperature measurement unit is connected to one surface of the bent part facing the battery cell.

4. The battery module according to claim 3,
wherein the bent part is formed by being recessed from the circuit body, and a spare space is formed between the bent part and the circuit body.

5. The battery module according to claim 4,
wherein the temperature measurement unit is movable to the spare space.

6. The battery module according to claim 4,
wherein the other end of the bent part is spaced apart from the circuit body in a state where only one end of the bent part is connected to the circuit body.

7. The battery module according to claim 3,
wherein the retaining portion is located between the battery cell and the bent part, and is attached to the battery cell and the bent part.

8. The battery module according to claim 7,
wherein the retaining portion is connected to one surface of the bent part to which the temperature measurement unit is connected.

9. The battery module according to claim 8,
wherein as the retaining portion is pushed in the outward direction of the battery cell by the battery cell, the temperature measurement unit is moved in a direction parallel to the direction where the retaining portion is pushed.

10. The battery module according to claim 8,
wherein one surface of the bent part to which the temperature measurement unit and the retaining portion are connected comprises a flat surface.

11. The battery module according to claim 2,
wherein the bent part is formed in plurality.

12. The battery module according to claim 2,
wherein the retaining portion is provided in plurality, and the temperature measurement unit is located between the plurality of retaining portions.

13. The battery module according to claim 12,
wherein the plurality of retaining portions and the temperature measurement unit are located on one surface of the bent part facing the battery cell, and
at least one of the plurality of retaining portions is located closer to the connection part of the circuit body and the bent part than the temperature measurement unit.

14. The battery module according to claim 1,
wherein the retaining portion is located on one surface of the circuit unit where the temperature measurement unit is located, and separates the circuit unit and the temperature measurement unit from the battery cell at a regular interval.

15. The battery module according to claim 14,
wherein the temperature measurement unit is movable in a direction away from the battery cell.
